# EUROPÄISCHE PATENTANMELDUNG

(11) **EP 0 827 169 A2**
(43) Veröffentlichungstag der Anmeldung: **04.03.1998**
(21) Anmeldenummer: 97114727.7
(22) Anmeldetag: 26.08.1997
(51) Int. Cl.: H01H 39/00

(54) **Notabschaltvorrichtung für Bordstromnetze von Kraftfahrzeugen**

(30) Priorität: 28.08.1996 DE 29614976 U
(71) Anmelder: N & L ELEKTROTECHNIK GmbH, D-63791 Karlstein (DE)
(72) Erfinder: Noe,Klaus-Peter, 63791 Karlstein (DE)
(74) Vertreter: Jaeger, Klaus, Dr.

(57) **Zusammenfassung**

Die Erfindung betrifft eine Notabschaltvorrichtung für Bordstromnetze von Kraftfahrzeugen, insbesondere von Fahrzeugen mit Verbrennungsmotoren und/oder Elektromotoren. Auf der Hauptstrombahn (1) des Kraftfahrzeuges ist dabei mindestens eine mit einem Sensor, insbesondere einem Crash-Sensor zusammenwirkende Unterbrechungseinrichtung (2) für den Stromfluß so angeordnet, daß diese im Falle eines Crashes die Hauptstrombahn (1) sofort unterbricht. Die Unterbrechungseinrichtung (2) umschließt dabei die Hauptstrombahn (1), welche durch die Unterbrechungseinrichtung (2) hindurchgeführt wird und in mehrere Kammern (4,6) unterteilt ist. Im Falle eines Crashes bewegt sich ein Trennkörper (3) innerhalb der Unterbrechungseinrichtung und durchtrennt die Hauptstrombahn.

## Beschreibung

Die Erfindung betrifft eine Notabschaltvorrichtung für Bordstromnetze von Kraftfahrzeugen, insbesondere von Fahrzeugen mit Verbrennungsmotoren und/oder Elektromotoren.

Es sind eine Reihe von Sicherheitsvorrichtungen in Kraftfahrzeugen zum Abschalten des Batteriestromes von Bordnetzen bekannt. Bei diesen Sicherheitsvorrichtungen in Kraftfahrzeugen wird über einen steuerbaren Sicherheitsschalter zum Abschalten des durch eine Kraftfahrzeugbatterie abgegebenen elektrischen Stromes vom Bordnetz eine Steuereinheit vorgesehen, die ein Signal zur Erkennung eines Anlaßvorganges erfaßt, den aus der Batterie entnommenen Strom ermittelt und den steuerbaren Sicherheitsschalter öffnet, wenn kein Anlaßvorgang vorliegt und der Wert des aus der Batterie entnommenen Stromes größer als ein vorgegebener Kurzschlußgrenzwert ist. Diese und ähnliche Sicherheitseinrichtungen erfüllen ihren Zweck unter normalen Straßenverkehrsbedingungen bzw. beim Abstellen oder Parken der Kraftfahrzeuge. In Unfallsituationen, also während oder nach einem Unfall, kann nicht gewährleistet werden, daß eine derartige Sicherheitsvorrichtung funktionsfähig ist bzw. bleibt und den Batteriestrom vom Bordnetz trennt. Durch Crash-Situationen ausgelöste Kurzschlüsse führen bei Unfällen im Straßenverkehr immer wieder zu Bränden an den Fahrzeugen, die regelmäßig immer wieder Menschenleben fordern und Sachwerte zerstören. Diese Brände werden zum überwiegenden Teil dadurch ausgelöst, daß durch Verformen der Karosserie Kurzschlüsse im Bordnetz auftreten und damit Lichtbögen Auslöser dieser Brände sind oder erhebliche Temperaturerhöhungen während des Crashs auftreten.

Ausgehend von diesem Stand der Technik ist es die Aufgabe der vorliegenden Erfindung, diese aus dem Bordstromnetz herrührenden Brände auslösenden Gefahrenquellen auszuschließen, insbesondere Mittel zu schaffen, die Kurzschlüsse im Bordnetz sowie Lichtbögen verhindern, dadurch ausgelöste Brände zu vermeiden und damit Menschenleben zu retten und Sachschäden zu minimieren.

Erfindungsgemäß wird diese Aufgabe durch eine Notabschaltvorrichtung für Bordstromnetze von Kraftfahrzeugen mit Verbrennungsmotor und/oder Elektromotor gelöst, die in Crash-Situationen den Stromfluß in der Hautpstrombahn des Kraftkfahrzeuges, also den Stromfluß aus der Batterie in das Bordnetz des Kraftfahrzeuges, sofort irreversibel unterbricht.

Die erfindungsgemäße Notabschaltvorrichtung ist dadurch gekennzeichnet, daß auf der Hauptstrombahn des Kraftfahrzeuges mindestens eine mit einem Sensor, insbesondere einem Crash-Sensor, zusammenwirkende Unterbrechungseinrichtung für den Stromfluß im Kraftfahrzeug so angeordnet ist, daß diese im Crashfall die Hauptstrombahn sofort unterbricht.

Die mit dem Crash-Sensor zusammenwirkende Unterbrechungseinrichtung ist so auf der Hauptstrombahn angeordnet, daß diese die Hauptstrombahn vollständig umschließt. Die Hauptstrombahn wird demzufolge durch die Unterbrechungseinrichtung hindurchgeführt und teilt die Unterbrechungseinrichtung in mehrere Kammern auf. Erfindungsgemäß wird die Unterbrechungseinrichtung in mindestens eine Zündkammer und eine Auffangkammer, welche um die Hauptstrombahn nach Art einer sich radial von der Hauptstrombahn weg erstreckenden Hülse ausgebildet sind, geteilt. In der Zündkammer sind dabei ein mit dem Crash-Sensor zusammenwirkender Zündsatz sowie mindestens ein vom Zündsatz beaufschlagbarer Trennkörper angeordnet. Der Trennkörper wird vom Zündsatz so beaufschlagt, daß er bei Auslösen des Crash-Sensors unter Durchtrennung der Hauptstrombahn in die Auffangkammer übertritt.

Der Trennkörper ist dabei so ausgebildet, daß er in mindestens einer Ebene eine Schneide aufweist. Die Schneide kann dabei flächig nach Art eines sich zuspitzenden Messers ausgebildet sein. Der Trennkörper kann ebenso mehrere von einem zentralen Punkt ausgehende winklig zueinander stehende Schneiden aufweisen. Der Trennkörper kann ebenfalls mehrere parallel zueinander angeordnete Schneiden aufweisen, die sich einseitig oder wechselseitig in Richtung Hauptstrombahn zuspitzen. Zwischen diesen parallel zueinander angeordneten Schneiden sind Aufnahmetaschen für den Kabelverschnitt angeordnet, so daß nach Durchtritt des Trennkörpers durch die Hauptstrombahn der aus der Hauptstrombahn geschnittene Kabelverschnitt in die Auffangkammer transportiert wird und dadurch ein versehentliches nochmaliges Aneinanderstoßen von Kabelenden vermieden wird. Der Trennkörper kann ebenfalls als flächiger Körper nach Art einer Trennscheibe ausgebildet sein, die von einem sehr scharfen Trenngrat umgeben ist. In der Auffangkammer sind Auslaßöffnungen für das Zündsatzgas sowie eine Auffangvorrichtung für den Trennkörper vorgesehen. Als Crash-Sensor kann der den Airbag auslösende Sensor eingesetzt werden.

Die Unterbrechungseinrichtung ist aus schwer entflammbarem Material ausgebildet. Der Trennkörper, welcher sich in der Zündkammer befindet und unmittelbar vor dem Zündsatz angeordnet ist, ist aus einem Material großer Härte, z.B. Keramik, Glas oder Edelstahl, mit entsprechend scharfen Schneidkanten ausgebildet.

Im Crashfall wird der Zündsatz, der mit dem Crash-Sensor verbunden ist, ausgelöst und schießt explosionsartig den Trennkörper durch die Hauptstrombahn. Dadurch wird schlagartig der Stromfluß von der Batterie in das Bordnetz des Kraftfahrzeuges durchtrennt und damit unterbrochen. Die Unterbrechungseinrichtung ist unmittelbar nach der Batterie angeordnet.

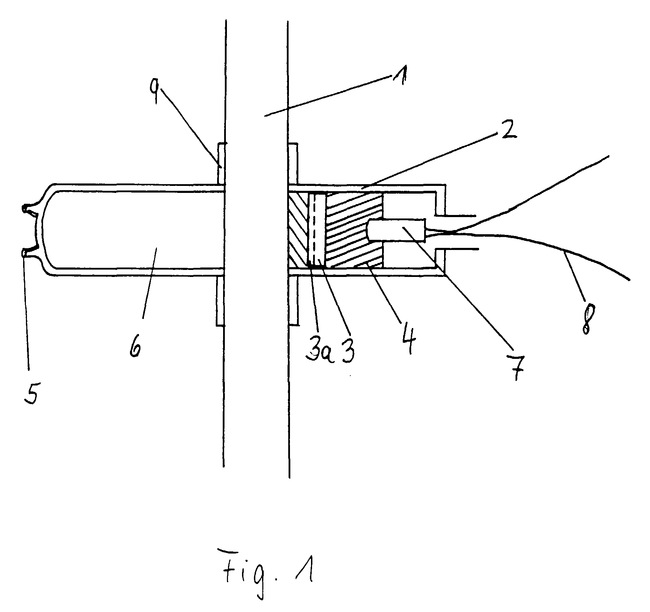

Die Erfindung soll nachfolgend an einem Ausführungsbeispiel (Fig. 1) näher erläutert werden.
- Fig. 1: zeigt in schematischer Schnittdarstellung eine Hauptstrombahn mit darauf angeordneter Unterbrechungseinrichtung.

Die Unterbrechungseinrichtung 2 ist über eine Art Hülse 9 mit Halterungen direkt auf der Hauptstrombahn 1 angeordnet. Die Unterbrechungseinrichtung 2 ist so ausgebildet, daß die Hauptstrombahn 1 direkt durch die Unterbrechungseinrichtung 2 hindurchgeführt wird und diese dabei in zwei Kammern, eine Zündkammer 4 und eine Auffangkammer 6, teilt. In der Zündkammer 4 sind der Zündsatz 7 mit Anschlüssen bzw. Zuleitungen zum Crash-Sensor sowie der Trennkörper 3 mit einem Trenngrat 3a angeordnet. Der Trennkörper 3 ist dabei unmittelbar vor dem Zündsatz 7 angeordnet, daß dieser bei Auslösen des Sensors durch den Sprengsatz explosionsartig durch die Hauptstrombahn geschleudert werden kann und diese dabei zerschneidet. Der Trennkörper ist nach Art einer Trennscheibe aufgebaut. Die Auffangkammer 6 weist Auslaßöffnungen 5 für die Zündsatzgase auf. Bei Auslösen des Crash-Sensors, der auch der den Airbag auslösende Sensor sein kann, wird der Trennkörper schlagartig mit großem Druck aus der Zündkammer in die Auffangkammer geschossen und durchtrennt dabei die Hauptstrombahn vollständig. Die im Trennkörper angeordneten Aufnametaschen nehmen dabei den Kabelverschnitt auf und transportieren diesen in die Auffangkammer.

## Patentansprüche

1. Notabschaltvorrichtung für Bordstromnetze von Kraftfahrzeugen mit Verbrennungsmotor und/oder Elektromotor,
dadurch **gekennzeichnet,**
daß auf der Hauptstrombahn (1) des Kraftfahrzeuges mindestens eine mit einem Sensor, insbesondere einem Crashsensor, zusammenwirkende Unterbrechungseinrichtung (2) für den Stromfluß im Kraftfahrzeug so angeordnet ist, daß diese im Falle eines Crashes die Hauptstrombahn (1) sofort unterbricht.

2. Notabschaltvorrichtung nach Anspruch 1,
dadurch **gekennzeichnet,**
daß die mit dem Crashsensor zusammenwirkende Unterbrechungseinrichtung (2) so auf der Hauptstrombahn (1) angeordnet ist, das diese die Hauptstrombahn (1) umschließt.

3. Notabschaltvorrichtung nach Anspruch 1 und 2,
dadurch **gekennzeichnet,**
daß die Hauptstrombahn (1) so durch die Unterbrechungseinrichtung (2) hindurchgeführt wird, das diese in mehrere Kammern geteilt wird, wobei mindestens eine Zündkammer (4) und eine Auffangkammer (6) gebildet wird.

4. Notabschaltvorrichtung nach einem der vorgenannten Ansprüche,
dadurch **gekennzeichnet,**
daß in der Zündkammer (4) mindestens ein mit dem Crashsensor zusammenwirkender Zündsatz (7) sowie mindestens ein vom Zündsatz (7) beaufschlagbarer Trennkörper (3) angeordnet sind.

5. Notabschaltvorrichtung nach einem der vorgenannten Ansprüche,
dadurch **gekennzeichnet,**
daß der Zündsatz (7) den Trennkörper (3) so beaufschlagt, das er unter Durchtrennung der Hauptstrombahn (1) in die Auffangkammer (6) übertritt.

6. Notabschaltvorrichtung nach einem der vorgenannten Ansprüche,
dadurch **gekennzeichnet,**
daß der Trennköper (3) so ausgebildet ist, das er in mindestens einer Ebene eine Schneide (3a) aufweist.

7. Notabschaltvorrichtung nach Anspruch 6,
dadurch **gekennzeichnet,**
daß der Trennkörper (3) mehrere von einem zentralen Punkt ausgehende winklig aufeinanderstehende Schneiden aufweist.

8. Notabschaltvorrichtung nach einem der Ansprüche 6 und 7,
dadurch **gekennzeichnet,**
daß der Trennkörper (3) mehrere parallel zueinander angeordnete Schneiden aufweist, zwischen denen Aufnahmetaschen für den Kabelverschnitt angeordnet sind.

9. Notabschaltvorrichtung nach einem der vorgenannten Ansprüche,
dadurch **gekennzeichnet,**
daß die Auffangkammer (6) Auslaßöffnungen (5) für Zündsatzgase und eine Auffangvorrichtung für den Trennkörper (3) aufweist.

10. Notabschaltvorrichtung nach einem der vorgenannten Ansprüche,
dadurch **gekennzeichnet,**
daß als Crashsensor der den Airbag auslösende Sensor eingesetzt wird.
